# EUROPÄISCHE PATENTSCHRIFT

(11) **EP 1 546 996 B1**
(45) Veröffentlichungstag und Bekanntmachung des Hinweises auf die Patenterteilung: **19.12.2007**
(21) Anmeldenummer: 03757681.6
(22) Anmeldetag: 22.09.2003
(51) Int. Cl.: G06K 9/62

(54) **VERFAHREN ZUM ERZEUGEN VON LERN- UND/ODER TESTSTICHPROBEN**
METHOD FOR CREATING LEARNING AND/OR TEST SAMPLES
PROCEDE DE PRODUCTION D'ECHANTILLONS D'APPRENTISSAGE ET / OU D'ECHANTILLONS DE TEST

(30) Priorität: 01.10.2002 DE 10245834
(43) Veröffentlichungstag der Anmeldung: 29.06.2005
(73) Patentinhaber: SIEMENS AKTIENGESELLSCHAFT, 80333 München (DE)
(72) Erfinder: MILETZKI, Udo, 78465 Konstanz (DE); LINDWURM, Rainer, 78315 Radolfzell (DE); GIERSZEWSKI, Gerd, 78476 Allensbach (DE)
(86) Internationale Anmeldenummer: PCT/DE2003/003149
(87) Internationale Veröffentlichungsnummer: WO 2004/032033

(56) Entgegenhaltungen:
- EP-A- 0 461 793
- US-B1- 6 269 171
- GOVINDAN V K ET AL: "ARTIFICIAL DATABASE FOR CHARACTER RECOGNITION RESEARCH" PATTERN RECOGNITION LETTERS, NORTH-HOLLAND PUBL. AMSTERDAM, NL, Bd. 12, Nr. 10, 1. Oktober 1991 (1991-10-01), Seiten 645-648, XP000230128 ISSN: 0167-8655
- "OPTICAL CHARACTER RECOGNITION TEST" IBM TECHNICAL DISCLOSURE BULLETIN, IBM CORP. NEW YORK, US, Bd. 36, Nr. 3, 1. März 1993 (1993-03-01), Seiten 201-202, XP000354749 ISSN: 0018-8689
- MIYOJIM M ET AL: "Synthesized images for pattern recognition" PATTERN RECOGNITION, PERGAMON PRESS INC. ELMSFORD, N.Y, US, Bd. 28, Nr. 4, 1. April 1995 (1995-04-01), Seiten 595-610, XP004013174 ISSN: 0031-3203

## Beschreibung

Die Erfindung betrifft ein Verfahren zum Erzeugen von Lern- und/oder Teststichproben für die Optimierung von automatischen Lesern für Sendungsaufschriften mit adaptiven Klassifikatoren.

Ein großer Anteil der in einem Adressleser auftretenden Verarbeitungsschritte wie z.B. Zeichen-, Wort-, und Schriftart-Erkennung basiert auf adaptiven Klassifikationsverfahren. Das allen adaptiven Verfahren gemeinsame Grundprinzip ist das Lernen von zuvor gesammelten Mustern, deren Eigenschaften in quantifizierbare Merkmals- oder Featuresätze abgebildet werden. Diese erlauben im weiteren Verlauf Rückschlüsse auf die Klassenzugehörigkeit. Deshalb kommt es bei adaptiven Verfahren grundsätzlich zu zwei Arbeitsphasen:
a) der Optimierungsphase, bestehend vorzugsweise aus Lern- und Testphase,
b) der Kannphase.

Während der Optimierungsphase muss zu jedem Merkmalssatz eines Musters, das je nach Aufgabe z.B. einem Zeichen, einem Wort oder einer Adresse besteht, seine Bedeutung in Form der Sollinformation hinzugefügt werden, damit die Bestimmungsgrößen des Klassifikationssystems optimal eingestellt werden können. Diese Phase, in der sich das System auf die optimale Parameter-Einstellung hinbewegt, läuft vorzugsweise in zwei Stufen ab, wobei in der Lernphase die Grundeinstellung der Parameter vorgenommen wird, während in der Testphase eine Feinjustierung der Parameter erfolgt. In der Kannphase wird dann nur noch der Merkmalssatz eines Musters benötigt, aus dem das Klassifikationssystem nach Maßgabe der abgespeicherten Parameter die Klassenzugehörigkeit ableitet.

Der größte entwicklungstechnische Aufwand zur Realisierung eines Klassifikationssystems steckt in der Lern- und Testphase, die jeweils wiederum in zwei Hauptaktivitäten aufgeteilt werden kann. Zunächst einmal muss eine Stichprobe präpariert werden, die die Erkennungsaufgabe hinreichend gut repräsentiert. Dann erfolgt die eigentliche Adaption des Klassifikationssystems, die sich je nach Klassifikationsmethode und Klassifikatordesign auf die Optimierung der zu Grunde liegenden Bestimmungsgrößen wie z.B. Optimierung der Klassifikatorkoeffizienten beim Polynomklassifikator, Optimierung der Gewichtsfaktoren beim Neuronalen Netz oder der Auswahl der effizientesten Referenzvektoren beim Nächstnachbar-Klassifikator konzentriert.

Während der zweite Aspekt der Lern- und Testphase weitgehend automatisiert ablaufen kann, da ihm im allgemeinen wohl definierte mathematische Methoden und Optimierungsverfahren zugrunde liegen, verbirgt sich hinter dem ersten Aspekt ein hoher Aufwand an Planungs-, Recherchier- und Kontrollarbeit, die nicht selten zum eigentlichen Flaschenhals der adaptiven Lösungsmethodik wird.

Zur Zusammenstellung der Stichproben werden nach dem Stand der Technik vor Ort große Mengen von Sendungen (Life-Mail) gesammelt und durch das sogenannte Labeln mit der Sollinformation (Bedeutung der Aufschriften, Layout-Angaben) manuell versehen. Es muss also von einem Bild auf die ursprüngliche, verloren gegangene Sollinformation/Bedeutung rückgeschlossen werden. (Jürgen Schürmann: Pattern Classification, Verlag: John Wiley&Sons, Inc., 1995, Chapter "Introduction Learning", pp. 17 - 21)

Der Vorgang der Zusammenstellung der Stichprobe ist aus verschiedensten Gründen von entscheidender Bedeutung für das automatische Erkennen, da sich ihre Qualität unmittelbar in der Leistungsfähigkeit des nachfolgend adaptierten Klassifikationssystems niederschlägt. Spiegelt die jeweilige Stichprobe die betrachtete Leseaufgabe hinreichend gut wider, wird sich auch in der Kann-Phase eine gute Leseleistung für das breite Spektrum der vorkommenden Muster einstellen. Ist die Stichprobe zu eng selektiert, hat man in der Kannphase auch nur für dieses eingeschränkte Spektrum gute Performance zu erwarten und erreicht nicht die erwartete Performance für den Rest der auftretenden Muster. Dieser Aspekt der hinreichend umfassenden Stichprobe korreliert unmittelbar mit dem Begriff der Repräsentativität einer Stichprobe aus der mathematischen Statistik.

Um eine qualitativ hochwertige und repräsentative Stichprobe zu erhalten, sind eine Reihe von Kriterien zu erfüllen. Grundvoraussetzung für eine gute Lern- und Teststichprobe ist, dass alle zu lernenden Formen einer Musterklasse in ausreichendem Maße vorhanden sind. Schon das ist oft eine gar nicht so leicht zu erfüllende Bedingung, da üblicherweise Aufgabenstellungen aus einer speziellen Anwendung kommen, die nur einen Ausschnitt einer Gesamterkennungsaufgabe darstellt. So haben z.B. im Bereich der Schrifterkennung im postalischen Bereich zum Zeitpunkt einer Klassifikatoradaption gewisse Fonts (Schriftarten), Drucktechniken oder Druckgeräte den Vorzug, die nur einen limitierten Ausschnitt des gesamten Spektrums darstellen. Im Verlaufe der Sendungsaufschriftenleserlebensdauer schieben sich vielleicht andere Fonts und Drucktechniken in den Vordergrund und müssen trotzdem noch hinreichend gut erkannt werden. Dieser Aspekt variiert auch oft beim Einsatz solcher Techniken in verschiedenen nationalen Bereichen. In einem hoch-technisierten Land kommen ganz andere Fonts und Druck-/Schreibgeräte zum Einsatz, als in einem Schwellenland. Dies erfordert eine überaus vorausschauende Zusammenstellung der Stichprobe und möglichst breite Basis für die Mustergenerierung.

Bei Sendungsanwendungen kommt es bisher oft vor, dass für eine spezielle Aufgabenstellung prinzipiell nicht genügend Beispiele gefunden werden können wie z.B. selten vorkommende Zeichen - etwa ,Q' im Deutschen oder ein seltenes Firmenlogo. Kategorien aus dem Bereich postalischer Anwendung sind zwar schnell formuliert und entsprechende Algorithmen entwickelt. Häufig können sie anschließend aber nicht aussagekräftig überprüft werden, da die Sichtung vorhandener Bestände der Stichprobe Exemplare der benötigen Klasse überhaupt nicht oder nicht in ausreichendem Maße beinhalten.

Als nächstes muss die einem Muster zugeordnete wahre Bedeutung stimmen. Bekommt nämlich ein adaptives System zu häufig die falsche Klassenzugehörigkeit zu einem Muster zugeordnet, dann wird es auch in der Kannphase vermehrt die falsche Entscheidung treffen, wenn entsprechende Muster vorgeführt werden. Das System ist eben adaptiv und lernt auch Fehlerhaftes, wenn man es ihm anbietet. Je kleiner die Fehlkennungen in der Lern- oder Teststichprobe sind, desto besser ist auch die Leistungsfähigkeit des entwickelten Klassifikationssystems.

Ein weiterer Aspekt hängt direkt mit der Generierung der Merkmalssätze zusammen. Üblicherweise werden die Merkmalssätze mit den in der vorhandenen Lesesoftware enthaltenen Erkennungsalgorithmen generiert, da die Umfänge meist nicht unerheblich sind (z.B. mehrere tausend Exemplare pro Zeichen bei der Zeichenerkennung), und die Merkmale möglichst realitätsnah sein sollen. Die vorhandenen Algorithmen arbeiten aber durchweg nicht fehlerfrei. So kommt es z.B. bei der Zeichensegmentierung zu fehlerhaften Segmenten, die statt eines Zeichens zum einen nur Zeichenbruchstücke oder zum anderen mehr als ein Zeichen enthalten oder auch manchmal nur Störinformation, die für eine Adaption allesamt nicht nur irrelevant, sondern massiv störend sind, da sie das Klassifikationssystem regelrecht in die Irre führten.

Innerhalb eines Mustererkennungsprozesses laufen außerdem eine ganze Reihe von Verarbeitungsschritten ab, die nicht sichtbar determiniert und erfassbar sind, sondern summarisch statistisch behandelt werden müssen. Dazu zählen z.B. Quantisierungeffekte durch Binarisierungen, Kontrastvariationen durch verschiedenfarbige Papieruntergründe, Rundungseffekte durch unterschiedliche Auflösungs- und Rasterisierungsalgorithmen bei Scan- und Druckgeräten, sowie Scan- und Druckqualitätsschwankungen durch Alter und unterschiedlichen Wartungszustand der Geräte.

All dies verdeutlicht die bisherigen Schwierigkeiten und den hohen Aufwand für die Optimierung automatischer Leser von Sendungsaufschriften.

Der Erfindung liegt die Aufgabe zugrunde, ein Verfahren zum Erzeugen von Lern- und/oder Teststichproben für die Optimierung von automatischen Lesern von Sendungsaufschriften mit adaptiven Klassifikatoren zu schaffen, mit dem die Stichproben mit geringem zeitlichen und personellen Aufwand erstellt und problemlos an die jeweiligen Klassifikationsaufgaben angepasst werden können.

Für die Erstellung von Testmustern für die OCR ist es aus der EP-A-0 461 793 bzw. dem Dokument "OPTICAL CHARACTER RECOGNITION TEST", IBM TECHNICAL DISCLOSURE BULLETIN, IBM CORP. NEW YORK, US, Bd. 36, Nr. 3, 1. März 1993 (1993-03-01), Seiten 201-202, bekannt, Buchstaben bzw. Textzeilen anhand von Parametern zu verändern.

Erfindungsgemäß wird die Aufgabe durch die Merkmale des Anspruches 1 gelöst.

Das vorliegende Verfahren ist dadurch gekennzeichnet, dass zuerst Sollinformationen als vollständige Beschreibung der inhaltlichen Bedeutung sowie des benötigten Layouts der Zeichen, Wörter und Sendungsaufschriften sowie optional der Objektbilder der gesamten, die Sendungsaufschriften enthaltenden Sendungsoberflächen als Stichprobenelemente der Stichprobe gemäß der Adaptionsaufgabe festgelegt werden.
Danach erfolgt das Generieren der zu den festgelegten Sollinformationen gehörenden Abbilder der Stichprobenelemente mit Hilfe der Schriftenbibliotheken für die festgelegten Schriftarten und Sprachen und Abspeichern der erzeugten Abbilder, den Sollinformationen zugeordnet, in Pixeldarstellung für die Stichprobe.
Anschließend werden die im vorherigen Schritt generierten Abbilder der Stichprobenelemente mittels an sich bekannten Bildverarbeitungsalgorithmen zur Erzeugung mindestens einer den bisher gesammelten und zusammengestellten Sendungen entsprechenden statistischen Vielfalt gemäß des festgelegten Stichprobenumfanges variiert. Die so erzeugten Varianten werden dann, den Sollinformationen zugeordnet, in Pixeldarstellung für die Stichprobe abgespeichert.
Die Sollinformation, die eine vollständige bildobjektliche, textliche und anordnungsgeometrische Beschreibung eines betrachteten Lern- und/oder Teststichprobenelementes darstellt, löst die Lernstichprobengenerierung aus. Auf das bisher übliche aufwändige Sammeln, Abtasten und Labeln gegenständlicher Sendungen einer Stichprobe beim Kunden mit dem Zwischenträger Papier als varianzmodellierender Zwischenschritt kann vollständig verzichtet werden. Die Lernstichprobenelemente sind stets mit der wahren Bedeutung gekennzeichnet, d.h. es gibt keine Labelfehler. Dies garantiert den maximalen Lerneffekt.

Vorteilhafte Ausgestaltungen der Erfindung sind in den Unteransprüchen dargestellt.

So ist es vorteilhaft, die in den Schriftfonts in Polygonzugbeschreibung vorliegenden Zeichenbilder zu rastern und in ein geeignetes Pixelformat zu bringen.

Vorteilhaft ist es auch, durch mehrmaliges Rastern der Zeichenbilder in Polygonzugbeschreibung Varianten in Pixeldarstellung zu erzeugen und in der Stichprobe abzuspeichern.

Um eine möglichst realistische Nachbildung der papiergebundenen Stichprobenerzeugung zu erzielen, werden beim Variieren der Abbilder der Zeichen, Wörter oder Sendungsaufschriften Stör- und Abnutzungsprozesse beim herkömmlichen Drucken der Sendungsaufschriften und beim späteren optischen Abtasten sowie Streuungen bei der Papierqualität simuliert.

Das Verändern der Zeichengrößen, Zeichenneigungen sowie Durchführen von Zeichenverzerrungen zum Variieren der Abbilder der Zeichen erfolgt vorteilhaft in der Polygonzugdarstellung.

Vorteilhaft ist es auch, zum Variieren der Abbilder der Wörter oder Sendungsaufschriften Veränderungen der Metrik, der Zeilenneigungen und des Punktrauschens durchzuführen.

Für das Generieren der Abbilder der Sendungsoberflächen mit den Sendungsaufschriften wird vorteilhaft auf in einer Objektbildbibliothek abgelegte Objektbilder zugegriffen.

Anschließend wird die Erfindung in einem Ausführungsbeispiel anhand der Zeichnungen näher erläutert.

Dabei zeigen
- FIG 1: ein Strukturbild zur Stichprobenerzeugung;
- FIG 2: ein Flussbild zur Stichprobengenerierung von Zeichen;
- FIG 3: ein Flussbild zur Stichprobengenerierung von Worten;
- FIG 4: ein Flussbild zur Stichprobengenerierung von Adressen.

Mit der erfindungsgemäßen Lösung werden folgende Anforderungen an eine qualitativ hochwertige Stichprobe zum Lernen oder Testen erfüllt:
- Bereitstellen der für eine Aufgabenstellung notwendigen Formen-/Typenvielfalt,
- Bereitstellen der für eine Aufgabenstellung notwendigen Layoutvielfalt,
- fehlerfreie Sollkennungsvergabe,
- ausschließliche Generierung von Nutz-Merkmalssätze,
- algorithmische Simulation der anwendungstypischen Merkmalsvarianz.

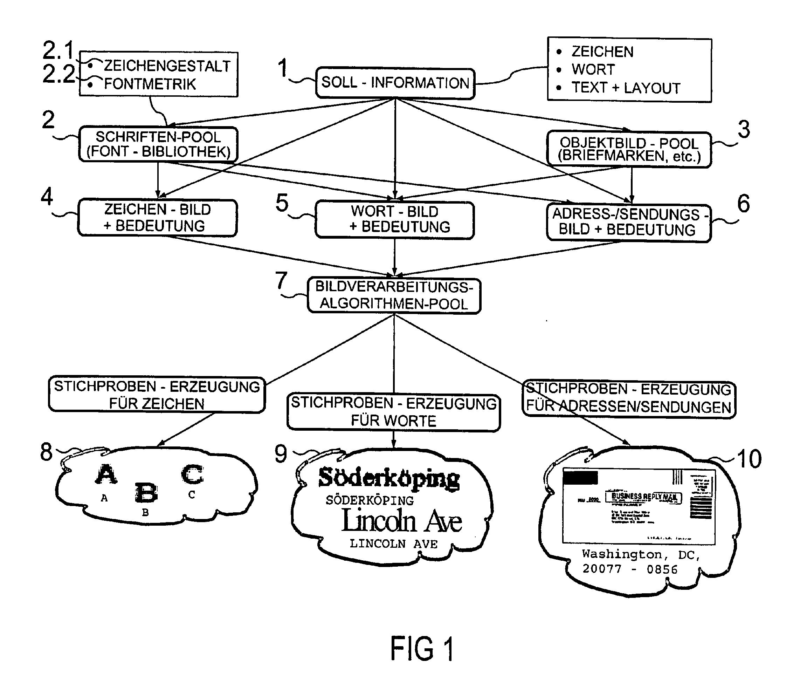

Dies geht mit dem Verzicht von Papier als üblichen Zwischenträger einher - und damit auch mit der Umgehung von Drucker und Scanner - , was letztendlich den personellen Stichproben-Generierungsaufwand erheblich reduziert.
Für den Bereich postalischer oder sonstiger Dokumentanwendungen sind vier Ausgangsmengen zu betrachten, wie in FIG 1 dargestellt. Es ist die Soll-Information 1, der Schriftenpool 2, der Objektbildpool 3 und der Bildverarbeitungsalgorithmenpool 7. Dabei sind der Schriftenpool 2, Objektbildpool 3 und Bildverarbeitungsalgorithmenpool 7 entweder auf dem Markt käufliche oder softwarelizenzfrei angebotene Produkte und Algorithmen. Nur die Sollinformation 1 ist ab Wortebene naturgemäß firmenintern, da sie ausnahmslos aufgabenspezifisch und so flexibel realisiert sein muss.

Der Schriftenpool 2, der aus einer Sammlung verschiedenster Fontbibliotheken mit vielen hundert Fonts (Arial, Times, Univers, ...) in unterschiedlichen Formaten (PostScript Type 1, Truetype, Metafont, IK, ...) und verschiedenen Sprachen (Latein, Griechisch, Kyrillisch, Arabisch, Hindi, ...) besteht, sorgt z.B. für die Formen-/Typenvielfalt einer Zeichen-, Wort- oder Textstichprobe. Jede Fontbibliothek besteht mindesten aus der eigentlichen Sammlung der Zeichengestalten 2.1, die entweder in Outlinebeschreibung oder schon direkt gerastert abgelegt sind, den Fontmetrikinformationen 2.2, die Satzinformationen wie z.B. Spacing, Underline und Unterschneidungen enthalten, die wesentlich sind für die Generierung realistischer Wort- und Textbilder.

Die Sollinformation 1 enthält mindestens drei unterschiedliche Sollinformationstypen, die den Hauptanwendungsbereichen Zeichen-, Wort, Sendungs-/Dokument-Stichprobe 8,9,10 Rechnung tragen. Die Sollinformation wird in zweierlei Hinsicht genutzt. Erstens zur Generierung komplexer Bildteile, wie Wort- und Sendungs- oder Dokumentbild und zweitens für die eigentliche Sollkennungszuordnung, die ja erst eine Lern- bzw. Teststichprobe ausmacht, mit der adaptiert und getestet werden kann. Zunächst ist da die Information eines Zeichen-Codes, unter der ein bestimmtes Zeichen eines Fonts angesprochen werden kann. Diese dient gleichzeitig als Sollinformation - die wahre Bedeutung, die zusammen mit dem Zeichenbild ein Element 4 der Lernstichprobe für Einzelzeichen bildet. Es folgt die Wortinformation, die in einfachster Ausprägung eine reine Ascii-Liste der zu generierenden Worte sein kann. Diese Liste steuert einerseits die Zeichen-Code-Vektormenge, die zur Generierung des Wortbildes notwendig ist und ist gleichzeitig Sollkennungsinformation zu eben diesem Wortbild 5. Als letztes bleibt die Text und Layoutinformation, die sowohl die rein textliche als auch geometrische Information aller am Dokument beteiligten Elemente wie z.B. Zeichen, Zeilen, Objektbilder, Linien, usw. enthält 6. Ist diese Layoutinformation fein genug und erfasst alle Zihzelobjekte, lässt sich einerseits jede beliebige Anordnung dieser Einzelobjekte bildhaft realisieren und in Testsituationen auch nachprüfen, um Erkennungsleistungen auf jeder Betrachtungsebene festzustellen. Durch diese Vorgehensweise ist es auch möglich, Lern- und Teststichproben zu generieren, die für eine Erkennungsaufgabe zwar prinzipiell denkbar, in aus dem Prozess gezogenen Testdecks aber nicht aufzuspüren sind. Auf diese Weise lassen sich auch Funktionaltestsets für bisher unrealisierbare Abdeckungsgrade erzielen.
Der Objektbildpool 3 dient dazu, alle die elementaren Objektbilder zu bündeln, die nicht aus Fontbibliotheken gewonnen werden können. Der Objektbildpool 3 kann sowohl eine eigene Sammlung von Objektbildern wie z.B. Briefmarken, Luftpost- oder Einschreibemarken, aber auch Bibliotheken mit elementaren Objektbildern aus völlig anderen Anwendungsbereichen wie z.B. Schaltkreis-, Technik oder Sicherheitszeichen sein. Mit Hilfe eines solchen Objektbildpools lassen sich dann beliebige Sendungs- und Dokumentvorlagen erstellen.

Dadurch, dass die Bildgenerierung direkt mit der Sollinformationszuordnung verknüpft ist, ist zudem auf natürliche Art und Weise gesichert, dass die Sollinformation automatisch richtig ist. Fehler bei der Lern-/Teststichprobengenerierung, die auf Grund unzulänglicher Algorithmen des Erkennungsablaufes bisher unweigerlich Fehlkennungen hervorgerufen und eine Unmenge Segmentmüll produziert haben, der dann anschließend wieder mühsam zu eliminieren war, gibt es bei der neuen vorgeschlagenen Vorgehensweise nicht mehr.

Durch die bisher geschilderten Ausgangsmengen und deren geschickte Verbindung zu einem Lern-/Teststichprobengenerierungsprozess, sind schon jetzt die ersten vier der fünf Anfangs angegebenen Kriterien berücksichtigt.
Die letzte Ausgangsmenge, der Bildverarbeitungsalgorithmenpool 7 sorgt nun dafür, dass auch das letzte Kriterium zur Geltung kommt. Dabei sind diesem Pool zwei Hauptanwendungsrichtungen zuzuordnen:
Rasterung der Bildobjekte (in Polygonzugbeschreibung) Varianzbildung auf die Bildobjekte

Unter dem Begriff Bildobjekt verbergen sich sowohl einfache als auch komplexe Bildobjekte. Unter einem einfachen Bildobjekt wird z.B. ein Zeichenbild verstanden, dass direkt aus einer Fontdatei gewonnen werden kann. Ist schon ein solches einfaches Bildobjekt ein gewünschtes Element einer Stichprobe, dann wird die Rasterisierung in eines der bekannten, kompakten Pixelformate pk, bdf oder sgml vorgenommen. Unter einem komplexen Bildobjekt sind alle Bilder zusammengefasst die eine Wort, Sendungs- oder sogar eine beliebigen Dokumentinformation enthält. Solche Bilder werden nach vorheriger Komposition aus den Einzelelementen, in ein allgemeineres Bildformat wie Tiff oder eines der Varianten der pnm-Familie abgelegt.

Getrennt von der Rasterung der Bildinformation, erfolgt die Varianzbildung. Diese kann selbst in zwei Hauptkategorien unterteilt werden. Einerseits kommt es beim realen Erkennungsprozess zu Formendeformationen auf Grund der sehr variabel verwendeten Schriftgröße, unterschiedlich gewählten Laufweiten (kondensed, gedehnt), verschieden eingestellten oder verfügbaren Auflösungen der Scan- und Druckwerkzeuge, sowie kleinen Rotationen der Schriftzeilen durch dynamische Effekte zu beachtlichen Variationen der Grundformen. Zum anderen generiert die verwendete Papierqualität, die Papierfarbe, die verwendeten Binarisierungsalgorithmen, das Alter und der Wartungszustand von Scan- und Druckwerkzeugen eine weitere unerschöpfliche Quelle zusätzlicher Grundformabweichungen, die es zu bearbeiten gilt. Während der erste Teil der Varianzursachen eher systematischer Natur ist, die durch algorithmische Maßnahmen ohne weiteres nachgebildet werden können, ist der andere Teil weitaus schwerer zugänglich und nur adaptiv simulativ bewältigbar. Zu beiden Variationskategorien gibt es genügend Algorithmen, die genutzt werden können, um aus der eher exemplarischen Menge der Grundformen genügend real brauchbare Abweichungen zu generieren, so dass sie den Mengenanforderungen einer statistisch signifikanten Lern-/ Teststichprobe genügen.

Die varianzerzeugenden Algorithmen, können sowohl auf der Polygonzugbeschreibung - als auch auf den Pixeldarstellungen operieren, wobei die schriftintrinsischen Variationen wie Schriftgrößen, Drehung und Verzerrungen eher auf der Polygonzugbeschreibung arbeiten, während die umgebungsabhängigen Variationen wie Papier-, Druckqualität und Gerätewartungseinflüsse eher pixelspezifisch einzubringen ist.

Der eigentliche Lern-/Teststichprobengenerierungsprozess erfolgt nun in Abhängigkeit von der gewünschten Lern-/ Teststichprobenart (Zeichen - Wort - Sendung/Dokument).

Der einfachste Fall ist die Generierung einer reinen Einzelzeichenstichprobe 8. Dazu werden nur die Zeichenbilder 2.1 aus einem ausgewählten Schriftenpool 2 und die gewünschten Sollinformationen 1 in Form der Zeichen-Codes benötigt. Da die Sollinformation direkt zur Auswahl des gewünschten Zeichenbildvorrates benötigt wird, und die Sollinformationszuweisung auch genau zu diesem Zeitpunkt geschieht, ist sie vom Prinzip her fehlerfrei. Gewünschte und verfügbare Varianzalgorithmen aus dem Bildverarbeitungsalgorithmenpool 7 werden dann auf das Zeichenbild angewendet und sofern es sich um Fonts in Polygonzugbeschreibung handelt, in ein eigenes oder bekanntes Pixelformat wie z.B. bdf ... gebracht. Dadurch erhält man eine in Hinsicht auf Stichprobenumfang und Stichprobenausprägung realitätsnahe und aufgabendefinierende Lern-/Teststichprobe. Da Varianzgesichtspunkte elektronisch in ausreichendem Maße nachempfunden sind, kann auf den Zwischenträger Papier verzichtet werden und ermöglicht eine sofortige weitere Nutzung zu den eigentlichen Adaptions- und Testzwecken.

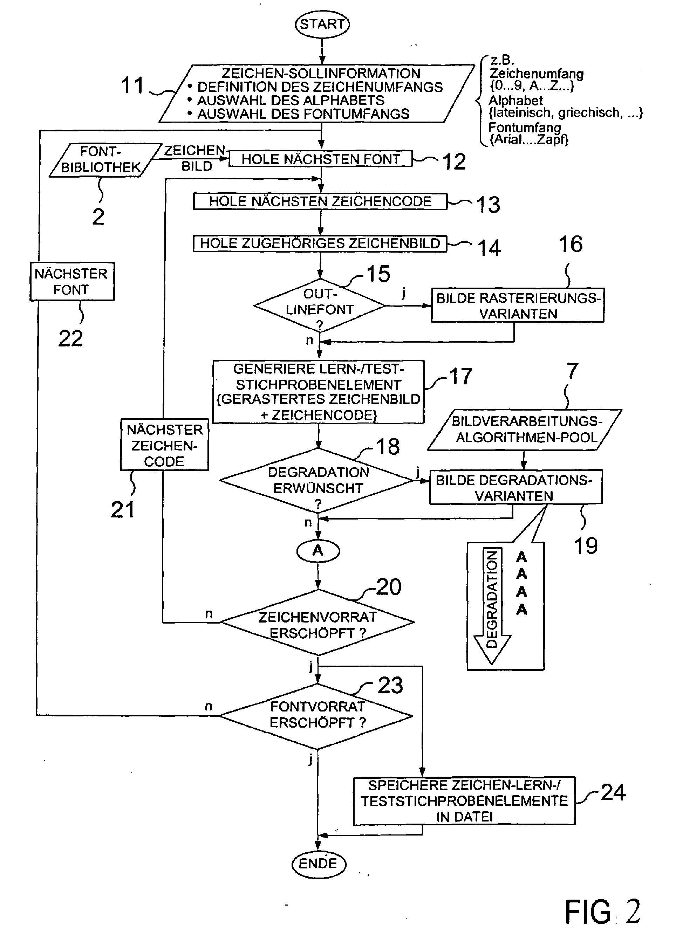

Im einzelnen läuft die Stichprobenerzeugung für Zeichen wie folgt ab (FIG 2):

Als erstes werden die Zeichen-Sollinformationen festgelegt 11 (Definition des Zeichenumfanges, Auswahl des Alphabets, Auswahl des Fontumfanges). Dementsprechend wird dann der erste Font aus der Fontbibliothek 2 geholt 12 und für den ersten Zeichencode 13 aus der Zeichen-Sollinformation 11 wird das zugehörige Zeichenbild geholt 14. Liegt das Zeichenbild in Outline-Beschreibung vor 15, so wird es einmal oder mehrmals gerastert 16, um Varianten der gerasterten Zeichenbilder im gewünschten Umfang zu diesem Zeichencode zu erzeugen und damit die Stichprobenelemente zu generieren 17. Liegt das Zeichenbild schon in Pixeldarstellung vor, so wird daraus mit dem Zeichencode ein Stichprobenelement generiert 17. Wird danach eine Degradation der Zeichenbilder in Pixelformat erwünscht 18, beispielsweise zur Nachbildung von Abnutzungen, Verschmutzungen von Druckern, Scannern, so werden mit Hilfe von entsprechenden Algorithmen aus dem Bildverarbeitungsalgorithmenpool 7 weitere Stichprobenelemente zu diesem Zeichencode generiert 19.
Dann werden die beschriebenen Schritte für die anderen Zeichencodes dieses Fonts durchgeführt 21, und zwar solange, bis der Zeichenvorrat erschöpft ist 20. Danach werden die Stichprobenelemente in einer Datei abgelegt 24.
Danach erfolgt die Prozedur für weitere Fonts 23, die gelesen werden müssen, bis der Fontvorrat erschöpft ist 22.

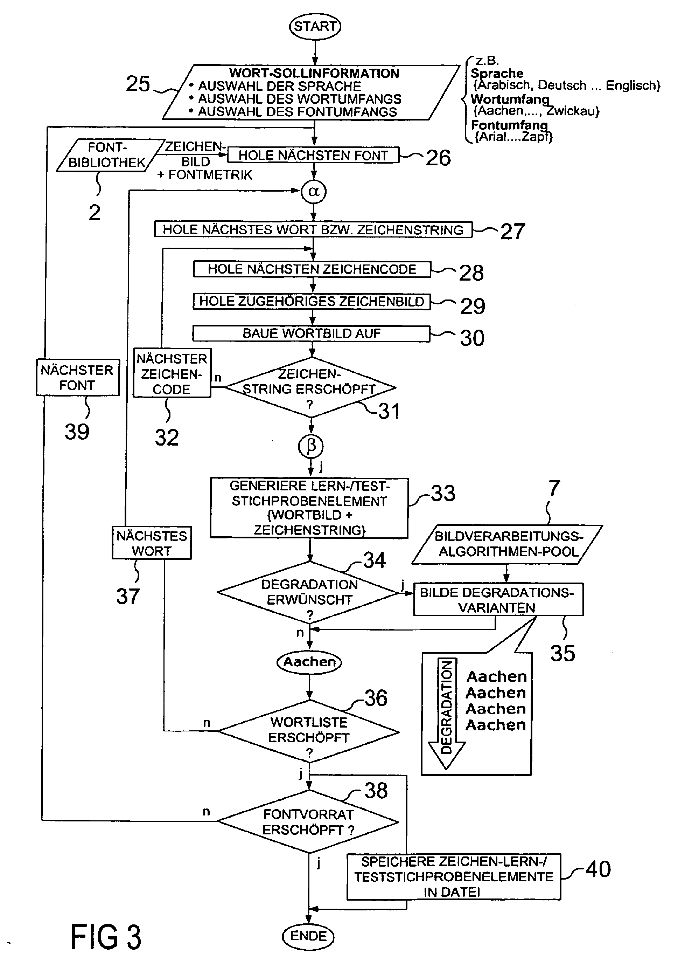

Ähnlich erfolgt der Ablauf bei der Erstellung der Wörterstichprobe 9. Ausgehend von der Leseaufgabe wird die Wort-Sollinformation 25 z.B. im ASCII-Format festgelegt (Auswahl der Sprache, des Wortumfanges, des Fontumfanges) und als Zeichenstring abgelegt (FIG 3). Anschließend wird der erste Font, bestehend aus den Zeichenbildern mit dem zugeordneten Zeichencode und der Fontmetrik, aus der Fontbibliothek geholt 26, danach das erste Wort bzw. der erste Zeichenstring 27 und dann dafür der erste Zeichencode 28. Zu diesem Zeichencode wird das entsprechende Zeichenbild zugeordnet 29 und mit Hilfe der Fontmetrik schrittweise das Wortbild aufgebaut 30, dann werden die nächsten Zeichencodes 32 geholt 28 bis der Zeichenstring erschöpft ist 31. Aus diesem Wortbild wird mit dem zugehörenden Zeichenstring ein Stichprobenelement generiert 33. Wird zusätzlich eine Degradation des Wortbildes gewünscht 34, so werden mit Hilfe des Bildverarbeitungsalgorithmenpools 7 Bildvarianten erzeugt 35. Varianzerhöhende Maßnahmen können hier nun sowohl auf der Einzelzeichenebene wie beschrieben, als auch auf dem ganzen Wortbild durchgeführt werden. Varianzerhöhungen auf dem ganzen Wortbild sind z.B. Fontmetrikvariationen, Zeilenneigungen, Punktrauschen usw.

Ist die Wortliste der Wort-Sollinformation noch nicht erschöpft 36, wird das nächste Wort 37 geholt 27 und der beschriebene Ablauf wird solange durchgeführt, bis die Wortliste erschöpft ist. Dann erfolgt eine Abspeicherung der Wortbilder mit den zugehörigen Zeichenstrings als Stichprobenelemente in einer Datei im gängigen Bildformat wie Tiff oder PostScript 40. Ist jetzt der Fontvorrat noch nicht erschöpft 38, wird der nächste Font 39 geholt 26 und für alle Wörter der Wortliste werden wie beschrieben weitere Stichprobenelemente generiert.

Die Elemente einer Sendungsbildstichprobe 10 bestehen nun aus einer Ansammlung mehrerer Textbildteile. Für postalische Anwendungen sind übliche Informationen einer Adresse z.B. Städtenamen, Straßennamen, Empfänger- und Absendernamen. Die Textteile werden entsprechend den Wortbildern der Wortstichprobe 33 generiert. Textlicher Inhalt, Platzierung und Dimensionierung der Adressbildobjekte sind in einer entsprechenden Adress-Sollinformation (Definition des Adressstring - und des Adresslayoutumfanges, Auswahl der Sprache und des FontUmfanges) definiert. Je feiner die textliche und textbildliche Unterteilung ist, desto größer ist natürlich später die mögliche Variationsmöglichkeit für das Gesamtadressbild. Dies ist besonders wichtig, wenn ganz gezielt Algorithmen getestet werden sollen, die mit dem Auffinden bestimmter Adressteile beauftragt sind. Deshalb ist auf eine möglichst flexible Sollinformations-Struktur zu achten, die am Besten in einem getaggten Format wie z.B. HTML oder XML gehalten wird. Der Prozess der Adressbildgenerierung ist auch hier durch die Adress-Sollinformation gesteuert und so kann den einzelnen Adresselementen auch hier bei der Adressbildgenerierung die richtige Sollinformation fehlerfrei zugeordnet werden. Variationen des Adressbildes sind in diesem Falle auf allen drei Ebenen (Zeichen - Wort - Adresse) möglich. Auf Adressbildebene führen neben der Variation der Platzierungsinformation alle möglichen Schmutz und Rauscheffekte simulierende Variationen mittels Bildverarbeitungsverfahren für Bilddateien zu einer praktisch unerschöpflichen Vielfalt von Stichprobenvarianten, die über den bisherigen Weg einer Vorortstichprobensammlung nicht erreichbar gewesen ist.

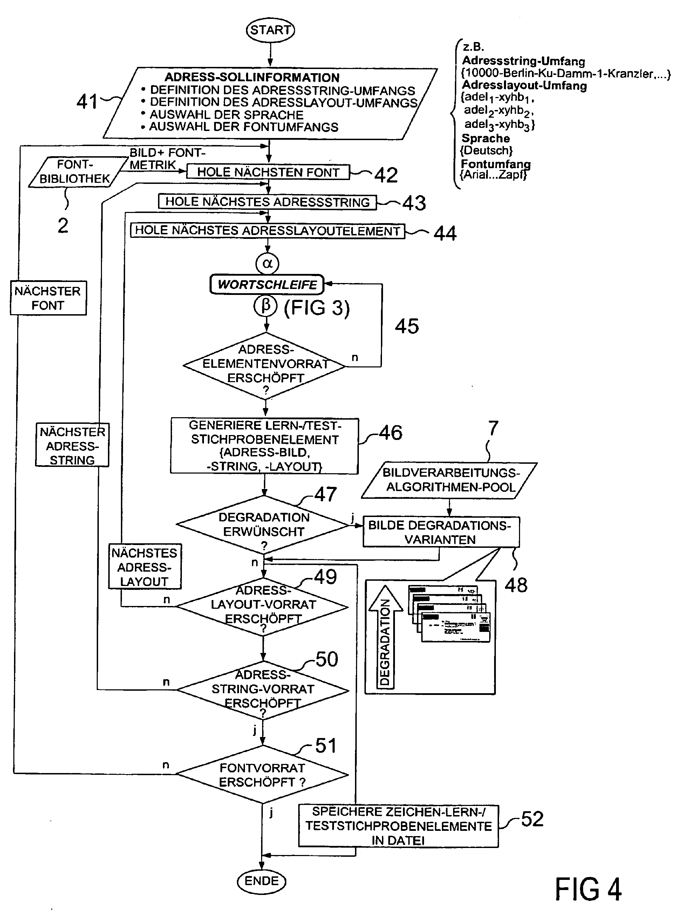

Der Ablauf im einzelnen erfolgt gemäß FIG 4 wie folgt: Nach dem Festlegen der Adress-Sollinformation (Definition des Adressstring-Umfanges, Definition des Adresslayout-Umfanges: Welche Adressteile befinden sich wo und mit welchen Abmessungen im Adressbild, Auswahl der Sprache und des FontUmfanges) 41 wird einer der Soll-Fonts aus der Fontbibliothek geholt 42, ein Adressstring und ein Adresslayoutelement werden geholt 43,44 und gemäß FIG 3 wird die Wortschleife abgearbeitet, bis der Adresselementvorrat für diesen Adressstring erschöpft ist 45. Dann erfolgt das Generieren des entsprechenden Stichprobenelementes (Sollinformation, Adress-Bild, -String, Layout) 46 und das Abspeichern in einer Datei 52. Werden Degradationen gewünscht 47, so werden mit Hilfe des Bildverarbeitungsalgorithmenpools Degradationsvarianten erzeugt 48 und ebenfalls mit der Sollinformation in einer Datei abgespeichert 52. Ist der Adresslayoutvorrat noch nicht erschöpft 49, wird das nächste Adresslayoutelement geholt 44 und mit diesem Font und Adressstring werden ebenfalls Stichprobenelemente erzeugt und abgespeichert. Wenn der Stringvorrat erschöpft ist 50, wird der nächste Adressstring geholt 43 und die Erzeugung/Speicherung der Stichprobenelemente mit sämtlichen Adresslayoutelementen erfolgt wie beschrieben. Sind alle Adressstrings abgearbeitet 50, wird ein neuer Font aus dem Fontvorrat geholt 42 und die Prozedur wird mit sämtlichen Adressstrings und Adresslayoutelementen wie beschrieben durchgeführt. Wurde die Stichprobenerzeugung mit allen Fonts durchgeführt und der Fontvorrat ist erschöpft 51, so ist die Stichprobenerzeugung beendet.

Natürliche Erweiterung einer Adressbildstichprobe ist die beliebige Sendungsbildstichprobe (10), bestehend aus einer Menge von Text- und Objektbildteilen.
Für postalische Anwendungen können die Textteile z.B. Empfänger oder Absenderadressen sein, während als Bildobjekte z.B. Briefmarken, Express- und Einschreibemarken in Frage kommen. Textlicher Inhalt, Platzierung und Dimensionisierung aller Einzelobjekte sind in der Sendungs-Sollinformation enthalten, die eine Erweiterung der Adress-Sollinformation um die Kategorien Objektbildumfang aus Objektbildpool 3 sowie Objektbild Layout-Umfang darstellt. Neben der Adressbildgenerierung und Bereitstellung aller gewünschten Objektbilder für ein beliebiges Sendungsbild, werden ausgehend von der Sendungs-Sollinformation über den Umfang der Layout-Varianten und Degradationsvarianten die entsprechenden Sendungsbilder generiert.

## Patentansprüche

1. Verfahren zum Erzeugen von Lern- und/oder Teststichproben für die Optimierung von automatischen Lesern für Sendungsaufschriften mit adaptiven Klassifikatoren unter Verwendung von Zeichenvarianten,
mit den folgenden Schritten:
- Festlegen der Sollinformationen als vollständige Beschreibung der inhaltlichen Bedeutung sowie des benötigten Layouts der Zeichen, Wörter und Sendungsaufschriften, sowie optional der Objektbilder, der gesamten, die Sendungsaufschriften enthaltenden Sendungsoberflächen als Stichprobenelemente der Stichprobe gemäß der Adaptionsaufgabe,
- Generieren der zu den festgelegten Sollinformationen gehörenden Abbilder der Stichprobenelemente aus dokumentenrelevanten Schriftenbibliotheken und Objektbildbibliotheken für die festgelegten Schriftarten und Sprachen und Abspeichern der den Sollinformationen zugeordnet erzeugten Abbilder in Pixeldarstellung für die Stichprobe,
- Variieren der im vorherigen Schritt generierten Abbilder der Stichprobenelemente mittels an sich bekannten Bildverarbeitungsalgorithmen zur Erzeugung realitätsnaher statistischer Variationen, die bei den auf der Basis der Adaptionsaufgabe bisher ausgewählten und zur Testprobe zusammengestellten Testsendungen und deren Verarbeitung hinsichtlich des Druckens und/oder des Lesens und/oder der Ausführung des Layouts der Sendungsabbilder und/oder der Papiereigenschaften und/oder der Pixeldarstellung der Sendungsbilder aufgetreten sind, durch deren Nachbildung mittels Simulation, und Abspeichern der erzeugten Varianten, den Sollinformationen zugeordnet, in Pixeldarstellung für die Stichprobe.

2. Verfahren nach Anspruch 1, **dadurch gekennzeichnet, dass** beim Variieren der Abbilder der Zeichen, Wörter oder Sendungsaufschriften Stör- und Abnutzungsprozesse beim herkömmlichen Drucken der Sendungsaufschriften und beim späteren optischen Abtasten simuliert werden.

3. Verfahren nach Anspruch 1, **dadurch gekennzeichnet, dass** zum Variieren der Abbilder der Zeichen in der Polygonzugdarstellung die Zeichengrößen, Zeichenneigungen verändert sowie Zeichenverzerrungen durchgeführt werden.

4. Verfahren nach Anspruch 1, **dadurch gekennzeichnet, dass** zum Variieren der Abbilder der Wörter oder Sendungsaufschriften Veränderungen der Metrik, der Zeilenneigungen und des Punktrauschens durchgeführt werden.

## Claims

1. Method for generating learning and/or test samples for optimizing automatic readers of addresses on items of mail with adaptive classifiers using character variants, with the following steps:
- definition of the reference information as a complete description of the meaning of the contents and of the required layout of the characters, words and addresses on the items of mail and, optionally of the object images, of the entire surfaces of the items of mail, containing the addresses on the items of mail, as sample elements of the sample according to the adaptation task,
- generation of the images of the sample elements associated with the defined reference information from document-related script libraries and object image libraries for the defined types of script and languages and storing the generated images, assigned to the reference information, in pixel representation for the sample,
- variation of the images of the sample elements generated in the previous step, by means of image processing algorithms which are known per se, for generating statistical variations which are close to the conditions in reality and which have occurred in the test items of mail which were selected previously on the basis of the adaptation task and collected for the test sample and during their processing in terms of printing and/or reading and/or execution of the layout of the images on the items of mail and/or the properties of the paper and/or the pixel representation of the images on the items of mail, by simulating the latter by means of simulation, and storage of the generated variations, assigned to the reference information, in a pixel representation for the sample.

2. Method according to claim 1, **characterized in that**, when the images of the characters, words or addresses on items of mail are varied, interference and wear processes occurring when the addresses on the items of mail are printed conventionally and when later visual scanning is carried out are simulated.

3. Method according to claim 1, **characterized in that**, in order to vary the images of the characters in the polygon representation, the sizes of the characters and inclinations of the characters are changed and character distortions are implemented.

4. Method according to claim 1, **characterized in that**, in order to vary the images of the words or addresses on the items of mail, changes are made in the metric, the inclinations of the lines and the spot noise.

## Revendications

1. Procédé de production d'échantillons d'apprentissage et/ou de test pour l'optimisation de lecteurs automatiques pour des inscriptions d'envois avec des classificateurs adaptatifs en utilisant des variantes de caractères,
comprenant les étapes suivantes :
- spécification des informations de consigne, en tant que description complète de la signification de contenu et du dessin structurel nécessaire des caractères, mots et inscriptions d'envois ainsi que, en option, des images d'objets de toutes les surfaces d'envois contenant les inscriptions d'envois, comme éléments de l'échantillon selon la tâche d'adaptation,
- production des reproductions, appartenant aux informations de consigne spécifiées, des éléments d'échantillon à partir de bibliothèques d'écritures et d'images d'objets déterminantes pour les documents pour les types d'écriture et langues spécifiés et mémorisation des reproductions, produites en association avec les informations de consigne, selon une représentation par pixels pour l'échantillon,
- modification des reproductions, produites à l'étape précédente, des éléments d'échantillon au moyen d'algorithmes de traitement d'image connus en vue de la production de variations statistiques proches de la réalité qui sont apparues au niveau des envois de test sélectionnés jusqu'à présent sur la base de la tâche d'adaptation et réunis en échantillon de test et lors de leur traitement portant sur l'impression et/ou la lecture et/ou la réalisation du dessin structurel des reproductions d'envois et/ou des propriétés du papier et/ou de la représentation par pixels des images d'envois, par leur imitation au moyen d'une simulation, et mémorisation des variantes produites, en association avec les informations de consigne, en représentation par pixels pour l'échantillon.

2. Procédé selon la revendication 1, **caractérisé par le fait que**, lors de la modification des reproductions des caractères, mots ou inscriptions d'envois, on simule des processus de perturbation et d'usure lors de l'impression habituelle des inscriptions d'envois et lors de l'échantillonnage optique ultérieur.

3. Procédé selon la revendication 1, **caractérisé par le fait que**, pour la modification des reproductions des caractères dans la représentation par tracé polygonal, on modifie les dimensions de caractères et les inclinaisons de caractères et on effectue des déformations de caractères.

4. Procédé selon la revendication 1, **caractérisé par le fait que**, pour la modification des reproductions des mots ou des inscriptions d'envois, on effectue des modifications de la métrique, des inclinaisons de lignes et du bruit ponctuel.
